# FASCICULE DE BREVET EUROPEEN

(11) **EP 3 458 435 B1**
(45) Date de publication et mention de la délivrance du brevet: **10.04.2024**
(21) Numéro de dépôt: 17731209.7
(22) Date de dépôt: 19.05.2017
(51) Int. Cl.: C05D 9/02

(54) **UTILISATION DU SILICIUM COMME STIMULANT DE L'ABSORPTION DE L'AZOTE CHEZ UNE PLANTE**
VERWENDUNG VON SILIKON ALS STIMULANS DER STICKSTOFFAUFNAHME IN EINER PFLANZE
USE OF SILICON AS A STIMULANT FOR NITROGEN ABSORPTION IN A PLANT

(30) Priorité: 19.05.2016 FR 1654441
(43) Date de publication de la demande: 27.03.2019
(73) Titulaire: Agro Innovation International, 35400 Saint-Malo (FR)
(72) Inventeur: YVIN, Jean-Claude, 35400 Saint-Malo (FR); ARKOUN, Mustapha, 35430 Saint Jouan Des Guérets (FR)
(74) Mandataire: Cabinet Beau de Loménie
(86) Numéro de dépôt international: PCT/FR2017/051219
(87) Numéro de publication internationale: WO 2017/198962

(56) Documents cités:
- WO-A1-03/016242
- WO-A1-2010/040176
- WO-A2-2010/006233
- US-A1- 2010 275 666
- US-A1- 2012 198 900
- SAJAL PATI ET AL: "Effect of Silicon Fertilization on Growth, Yield, and Nutrient Uptake of Rice", COMMUNICATIONS IN SOIL SCIENCE AND PLANT ANALYSIS., vol. 47, no. 3, 4 février 2016 (2016-02-04), pages 284-290, XP055336605, US ISSN: 0010-3624, DOI: 10.1080/00103624.2015.1122797
- D. YOGENDRA N. ET AL: "Effect of silicon on real time nitrogen management in a rice ecosystem", AFRICAN JOURNAL OF AGRICULTURAL RESEARCH, vol. 9, no. 9, 27 février 2014 (2014-02-27), pages 831-840, XP055336609, DOI: 10.5897/AJAR12.1841
- Fawaz Kurdali ET AL: "Growth and Nitrogen Fixation in Silicon and/or Potassium Fed Chickpeas Grown under Drought and Well Watered Conditions", Journal of Stress Physiology & Biochemistry, 1 août 2013 (2013-08-01), pages 385-406, XP055336614, Extrait de l'Internet: URL:http://www.jspb.ru/issues/2013/N3/JSPB _2013_3_385-406.pdf [extrait le 2016-01-18]

## Description

### Domaine technique

L'invention concerne une nouvelle utilisation du silicium pour stimuler l'absorption de l'azote chez une plante.

### Arrière-plan technologique

Les plantes doivent assimiler des éléments nutritifs pour leur assurer une croissance normale. En particulier, les plantes ont besoin d'assimiler des constituants essentiels pour la synthèse des protéines, comme l'azote. La plupart des plantes s'alimentent dans le sol en azote et utilisent cet élément pour la synthèse des protéines via des mécanismes d'absorption et de synthèse plus ou moins complexes. Ainsi, l'azote joue un rôle déterminant pour les cultures, à la fois sur le rendement et sur la qualité des productions. Il est donc indispensable de fournir aux plantes de l'azote en quantité suffisante et sous une forme facilement assimilable par la plante.

Une carence en azote chez la plante entraîne une croissance retardée, des tiges et des feuilles de petit format, un jaunissement des feuilles les plus anciennes, puis une chute des feuilles. La floraison et la fructification sont également touchées, avec des fruits petits, de qualité médiocre, et mûrs précocement.

Afin de prévenir les carences en azote, la plante peut être supplémentée avec une source d'azote, notamment par l'apport de compositions fertilisantes comprenant une source d'azote. Les compositions fertilisantes généralement utilisées permettent d'apporter la quantité suffisante d'azote pour que la plante puisse assurer une croissance normale.

Les fertilisants azotés sont de trois types, les fertilisants naturels d'origine organique, les fertilisants minéraux naturels ou de synthèse, et les fertilisants organiques de synthèse.

Les fertilisants azotés mis à la disposition des agriculteurs diffèrent notamment par leur formulation (solide, gazeuse ou liquide). Certains fertilisants ne sont composés que d'une seule forme d'azote, comme l'urée (100% azote uréique), l'ammoniac anhydre (100% NH₃) et le nitrate de potassium (100% azote nitrique). Mais la plupart des fertilisants ont des compositions mixtes, c'est-à-dire qu'elles comprennent plusieurs formes d'azote. Leur composition influence grandement la disponibilité de l'azote pour les plantes. En effet, les formes ammoniacale, nitrique et uréique, se transforment à des vitesses variables, déterminées par l'activité microbiologique du sol. L'urée subit une hydrolyse pour prendre la forme ammoniacale. Celle-ci peut être adsorbée et retenue temporairement sur le complexe argilo-humique du sol ou utilisée par les micro-organismes du sol qui sont alors en compétition avec la plante. La forme ammoniacale peut aussi évoluer rapidement vers la forme nitrique dès que la nitrification est active dans un sol chaud, aéré et humide. La forme nitrique est entièrement libérée dans la solution du sol et alimente préférentiellement la plante.

Les fertilisants azotés organiques de synthèse sont les plus utilisés en agriculture. Plusieurs types de fertilisants azotés organiques de synthèse sont commercialisés, par exemple :
- le sulfate d'ammonium qui, cristallisé ou granulé, donne un engrais appelé sulfate d'ammoniaque souvent dosé jusqu'à 21% d'azote ;
- l'urée obtenue par combinaison de l'ammoniac et du gaz carbonique formé lors de la synthèse de l'ammoniac. Elle peut être perlée ou granulée et titre jusqu'à 46% d'azote. L'urée est la source d'azote la plus utilisée dans le monde car elle présente un rendement en azote supérieur aux autres sources d'azote ;
- le nitrate d'ammonium obtenu par réaction entre l'ammoniac et l'acide nitrique. Celui-ci en mélange avec l'urée permet d'obtenir des solutions azotées communément utilisées en agriculture (la solution standard est dosée à 30% d'azote). Les ammonitrates, produits azotés les plus utilisés en France et en Europe, sont obtenus à partir du nitrate d'ammonium avec adjonction plus ou moins importante d'une charge inerte (e.g. carbonate de calcium ou dolomie). Ils contiennent de 21 à 33.5% d'azote total, dont 50% d'azote ammoniacal et 50% d'azote nitrique.

Les fertilisants azotés sous souvent combinés avec des produits soufrés. Par adjonction de produits soufrés tels que le sulfate d'ammoniaque et/ou le thiosulfate d'ammoniaque, on obtient des fertilisants azotés soufrés dont les titres en azote et en SO₃ sont adaptés aux situations agronomiques. Par exemple, pour les ammonitrates, en utilisant une charge contenant du soufre (e.g. sulfate de calcium et/ou sulfate de magnésium) on obtient des ammonitrates soufrés dont les titres en azote (N) et en SO₃ sont adaptés aux situations agronomiques.

Il est également essentiel que la plante puisse assimiler correctement les éléments nutritifs présents dans leur environnement, notamment l'azote présent dans les compositions fertilisantes ou naturellement présent dans le sol. Ainsi, une plante capable d'assimiler une quantité plus importante d'azote sera moins sensible aux risques de carence et va croitre plus rapidement. Ainsi, les quantités d'azote dans les compositions fertilisantes peuvent être diminuées, ce qui peut (i) présenter un gain financier substantiel lors des campagnes de fertilisation et (ii) permettre de diminuer les pertes d'azote par lessivage, et ainsi de diminuer l'impact des campagnes de fertilisation, sur l'environnement. SAJAL PATI ET AL: "Effect of Silicon Fertilization on Growth, Yield, and Nutrient Uptake of Rice",COMMUNICATIONS IN SOIL SCIENCE AND PLANT ANALYSIS., vol. 47, no. 3, 4 février 2016, pages 284-290, divulgue l'association d'un engrais standard et de la terre de diatomée. D. YOGENDRA N. ET AL: "Effect of silicon on real time nitrogen management in a rice ecosystem",AFRICAN JOURNAL OF AGRICULTURAL RESEARCH, vol. 9, no. 9, 27 février 2014, pages 831-84, divulgue l'association d'un engrais comprenant de l'azote (30 kg N ha⁻¹) en combinaison avec du CaSiO₃ ou du gel de silice.

Fawaz Kurdali ET AL: "Growth and Nitrogen Fixation in Silicon and/or Potassium Fed Chickpeas Grown under Drought and Well Watered Conditions",Journal of Stress Physiology & Biochemistry, 1 août 2013, pages 385-406, divulgue l'apport d'azote sous forme d'urée avec du silicium sous forme de métasilicate de sodium.

Il existe donc un besoin de mettre au point des traitements permettant de stimuler l'absorption de l'azote, notamment absorbé sous la forme d'urée, chez la plante.

C'est dans ce contexte que le demandeur a mis en évidence, et ceci constitue le fondement de la présente invention, que le silicium permet de stimuler l'absorption de l'azote, notamment absorbé sous la forme d'urée, chez une plante.

### Résumé de l'invention

Ainsi, la présente invention, qui trouve application dans le domaine agricole, vise à proposer une nouvelle utilisation du silicium comme stimulant de l'absorption de l'azote, notamment absorbé sous la forme d'urée chez une plante.

Selon un premier aspect, l'invention concerne l'utilisation du silicium en association avec de l'urée, comme stimulant de l'absorption de l'azote chez une plante.

Selon un deuxième aspect, l'invention concerne un procédé pour stimuler l'absorption de l'azote chez une plante, caractérisé en ce qu'il comprend l'apport à ladite plante ou aux sols d'une quantité efficace de silicium dans une composition fertilisante en association avec de l'urée.

### Description détaillée de l'invention

La présente invention découle des avantages surprenants mis en évidence par les inventeurs de l'effet stimulant du silicium sur l'absorption de l'azote, notamment absorbé sous la forme d'urée, chez une plante.

L'invention concerne en effet l'utilisation du silicium comme stimulant de l'absorption de l'azote chez une plante.

Dans le cadre de la présente invention, on entend designer par l'expression "plante" la plante considérée dans son ensemble, incluant son appareil racinaire, son appareil végétatif, les graines, les semences et les fruits.

L'utilisation du silicium permet une augmentation accrue (i.e. une stimulation) de l'absorption de l'azote. Cette stimulation de l'absorption permet d'améliorer la santé de la plante, répondant ainsi aux besoins de croissance de la culture qui s'exprimera notamment en termes d'amélioration de rendement et de la qualité de la récolte. L'utilisation du silicium selon l'invention permet également d'améliorer l'efficacité de la fertilisation en diminuant les quantités l'azote utilisées dans les compositions fertilisantes.

Dans le cadre de la présente description, on entend désigner par l'expression « composition fertilisante » tout produit dont l'emploi est destiné à assurer ou à améliorer les propriétés physiques, chimiques ou biologiques des sols ainsi que la nutrition des végétaux. Une telle composition peut être, par exemple, un engrais appliqué par voie racinaire ou par voie foliaire. On sait que les engrais se définissent comme des matières fertilisantes dont la fonction principale est d'apporter aux plantes des éléments nutritifs (éléments fertilisants majeurs, éléments fertilisants secondaires et oligo-éléments). L'utilisation des compositions fertilisantes, notamment contenant de l'azote, en grande quantité pose des problèmes sur le plan écologique. Une des réponses possibles aux effets indésirables de la fertilisation par les nitrates (problème de lessivage) ou par l'urée (problème de volatilisation), consiste à améliorer l'efficacité de l'absorption, notamment de l'azote. Cela constitue l'un des principaux avantages de la présente invention qui découle directement de la stimulation de l'absorption de l'azote, notamment absorbé sous la forme d'urée.

Au sens de l'invention, on entend par « silicium » l'élément chimique de symbole Si sous toutes ses formes. Cela comprend notamment la silice (également connue sous le terme « oxyde de silicium »), les silicates (e.g. SiO₃²⁻ et SiO₄⁴⁻) et les silicates combinés. La silice existe à l'état libre sous formes cristallines ou amorphes. Sous sa forme cristalline, la silice se présente sous forme de cristaux non-moléculaires formés de motifs tétraédriques SiO₄ liés entre eux par les atomes d'oxygène de façon régulière, comme dans le quartz. Sous sa forme amorphe, la silice se présente sous forme de dioxyde de silice (SiO₂), comme dans le verre. La silice est un oxyde acide qui réagit avec les oxydes basiques pour donner les silicates, notamment SiO₃²⁻ et SiO₄⁴⁻. Les silicates sont capables de se combiner à d'autres atomes métalliques, comme par exemple l'aluminium (AI), le fer (Fe), le Magnésium (Mg), le calcium (Ca), le sodium (Na), le potassium (K). Les silicates combinés ainsi obtenus sont respectivement le silicate d'aluminium (Al₂SiO₃), le silicate de fer (Fe₂SiO₃), le silicate de magnésium (Mg₂SiO₃), le silicate de calcium (Ca₂SiO₃), le silicate de sodium (Na₂SiO₃) et le silicate de potassium (K₂SiO₃). Dans un mode de réalisation particulier, le silicium est apporté à la plante sous forme de silicate de sodium (Na₂SiO₃), de silicate de potassium (K₂SiO₃), et/ou de leurs dérivés. Les dérivés comprennent par exemple les formes K₂SiO₄ et Na₂SiO₄.

Avantageusement, le silicium apporté à la plante peut provenir de différentes sources, par exemple de silice minérale solide (i.e. terre de diatomée ou sable), de silice minérale liquide (i.e. l'acide orthosilicique, Si(OH)₄), de produits vitreux à base de silicium (e.g. poudres ou fibres de verres), et/ou de silice organique.

Les diatomées sont des micro-algues marines qui sécrètent un squelette siliceux que l'on retrouve dans des carrières naturelles sous forme fossilisée. La terre de diatomée est généralement extraite de ces carrières naturelles riches en diatomées fossilisées. La terre de diatomée est essentiellement constituée de dioxyde de silicium (SiO₂).

Par produits vitreux à base de silicium, on entend toute matière vitreuse pulvérulente comprenant (i) un ou plusieurs éléments minéraux, notamment un ou plusieurs éléments minéraux sélectionnés parmi le potassium (K), le phosphore (P), le calcium (Ca), le magnésium (Mg), le soufre (S), le fer (Fe), le bore (B), le manganèse (Mn), le cuivre (Cu) et le molybdène (Mo) et (ii) du silicium. Les éléments minéraux sont préférentiellement sous forme d'oxydes.

La silice organique correspond au silanol (CH₃Si(OH)₃). La silice organique peut notamment provenir de résidus de culture riches en silicium, par exemple de plantes accumulatrices de silicium comme la canne à sucre, le riz, le bambou, le sorgho, le maïs, le blé, la prairie.

Chez la plante, le silicium est généralement transporté suivant le flux transpiratoire des racines vers les organes aériens où il est accumulé et précipite pour former des opales biogéniques, appelées phytolithes. L'accumulation de silicium est plus ou moins importante selon la variété de plante. Dans un mode de réalisation particulier, la plante est une plante accumulatrice de silicium.

Au sens de l'invention, on entend par « plante accumulatrice de silicium », une plante qui contient plus de 1% de Si poids/poids (ci-après w/w) de la masse sèche de la plante et un ratio molaire Si/Ca > 1. Les plantes accumulatrices de silicium comprennent notamment les bryophytes, les graminées, les cypéracées et les musacées.

Les plantes considérées comme non accumulatrices sont celles contenant moins de 0,5% de silicium (w/w de la masse sèche de la plante). Les plantes non accumulatrices de silicium comprennent notamment les gymnospermes et les dicotylédones.

Dans un mode de réalisation particulier, la plante est choisie parmi le riz, le blé, l'avoine, la canne à sucre, l'orge, le soja, le maïs, de préférence le riz.

Au sens de l'invention, on entend par « stimulant de l'absorption » une augmentation accrue de l'absorption, et/ou une amélioration des mécanismes d'absorption. La présente invention concerne donc l'utilisation du silicium comme stimulant des mécanismes d'absorption de l'azote, notamment absorbé sous la forme d'urée, chez une plante. La présente invention concerne également l'utilisation du silicium pour augmenter l'absorption l'azote chez une plante.

Dans le cadre de la présente invention, une quantité efficace de silicium est apportée à la plante pour stimuler l'absorption de l'azote. Ainsi, dans un mode de réalisation particulier, le silicium est apporté à la plante dans une quantité efficace pour augmenter l'absorption de l'azote par la plante d'au moins 10%, au moins 15%, au moins 20%, au moins 25%, au moins 30%, avantageusement d'au moins 30%, au moins 35%, au moins 40%, au moins 45%, avantageusement d'au moins 50%, au moins 55%. En d'autres termes, le silicium apporté à la plante permet d'augmenter la teneur en l'azote dans la plante d'au moins 10%, au moins 15%, au moins 20%, au moins 25%, au moins 30%, avantageusement d'au moins 30%, au moins 35%, au moins 40%, au moins 45%, avantageusement d'au moins 50%, au moins 55%.

L'augmentation de l'absorption se mesure en déterminant la teneur en l'azote dans la plante. Le terme « augmentation » s'entend par rapport à la plante avant l'apport en silicium, par exemple par rapport à la plante n'ayant reçu aucun apport en silicium. La « teneur » en azote s'exprime en w/w de masse sèche, ce qui correspond à la masse en azote contenu dans un échantillon de plante séchée. La mesure de la teneur en azote est réalisée par une méthode d'analyse appropriée.

Le silicium peut être apporté à la plante par voie racinaire ou par voie foliaire. Dans un mode de réalisation particulier, le silicium est apporté à la plante :
- soit sous forme liquide dans des solutions nutritives racinaires, par exemple en une quantité allant de 0.5 à 5 g/L, et de préférence de l'ordre de 1 g/L ;
- soit sous forme liquide dans des solutions nutritives foliaires, par exemple en une quantité allant de 10 à 50 g/L, et de préférence de l'ordre de 30 g/L ;
- soit sous forme solide, par exemple dans des engrais pulvérulents ou granulés, par exemple en une quantité allant de 10 à 100 kg/Tonne (T) et de préférence de l'ordre de 50 kg/Tonne (T).

Dans un mode de réalisation particulier, le silicium est apporté à la plante en une quantité allant de 2 kg/ha (kilogrammes/hectare) à 1000 kg/ha. Dans ce mode de réalisation, le silicium est avantageusement répandu de façon homogène sur un champ ou une culture de plantes.

Le silicium peut ainsi être utilisé en complément dans des compositions fertilisantes, telles que des engrais, comme stimulant de l'absorption de l'azote chez une plante. Le silicium peut être associé à d'autres substances fertilisantes classiquement utilisés dans les compositions fertilisantes. Dans un mode de réalisation particulier selon l'invention, une quantité efficace de silicium est utilisée dans une composition fertilisante en association avec une ou plusieurs substances fertilisantes. Les substances fertilisantes susceptibles d'être utilisées en association avec le silicium peuvent être de natures variées et choisies par exemple parmi l'urée, le sulfate d'ammonium, le nitrate d'ammonium, le phosphate naturel, le chlorure de potassium, le sulfate d'ammonium, le nitrate de magnésium, le nitrate de manganèse, le nitrate de zinc, le nitrate de cuivre, l'acide phosphorique, l'acide borique. Avantageusement, la substance fertilisante utilisée en association avec le silicium est choisie parmi l'urée, le sulfate d'ammonium, le nitrate d'ammonium, la solution azotée et/ou le nitrate de potassium.

L'azote est absorbé sous la forme d'urée. Ainsi, l'invention concerne l'utilisation du silicium comme stimulant de l'absorption de l'urée chez une plante.

L'invention vise également un procédé pour stimuler l'absorption de l'azote chez une plante, caractérisé en ce qu'il comprend l'apport à ladite plante ou aux sols, d'une quantité efficace de silicium.

Le silicium peut être apporté à la plante par voie racinaire ou par voie foliaire. Dans un mode de réalisation particulier, le silicium est apporté à la plante :
- soit sous forme liquide dans des solutions nutritives racinaires, par exemple en une quantité allant de 0.5 à 5 g/L, et de préférence de l'ordre de 1 g/L
- soit sous forme liquide dans des solutions nutritives foliaires, par exemple en une quantité allant de 10 à 50 g/L, et de préférence de l'ordre de 30 g/L,

- soit sous forme solide, par exemple dans des engrais pulvérulents ou granulés, par exemple en une quantité allant de 10 à 100 kg/Tonne (T) et de préférence de l'ordre de 50 kg/Tonne (T).

Dans un mode de réalisation particulier, le silicium est apporté à la plante en une quantité allant de 2 kg/ha à 1000 kg/ha. Dans ce mode de réalisation, le silicium est avantageusement répandu de façon homogène sur un champ ou une culture de plantes. Dans un mode de réalisation particulier, l'azote est absorbé sous la forme d'urée. Ainsi, l'invention concerne également un procédé pour stimuler l'absorption de l'urée chez une plante, caractérisé en ce qu'il comprend l'apport à ladite plante ou aux sols, d'une quantité efficace de silicium.

La présente invention sera maintenant illustrée par les exemples non limitatifs suivants.

Dans ces exemples, et sauf indication contraire, les pourcentages sont exprimés en poids et la température est la température ambiante.

### Légende des figures

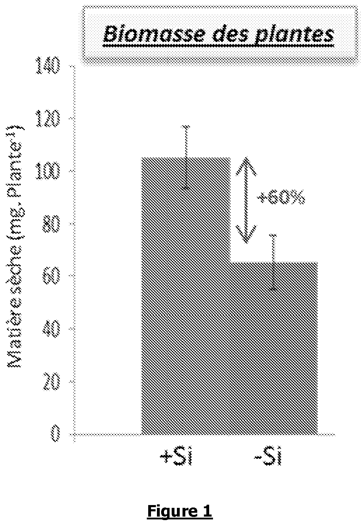

*Figure 1* : graphique qui représente la biomasse d'un plant de riz, *i.e.* la masse sèche d'un plant de riz, (i) avec une alimentation qui comprend du silicium (Na₂SiO₃), *i.e.* barre « +Si » et (ii) avec une alimentation qui ne comprend pas de silicium, *i.e.* barre « -Si ». Le graphique montre une augmentation de 60% de la biomasse des plantes dont l'alimentation comprend du silicium par rapport aux plantes dont l'alimentation ne comprend pas de silicium.

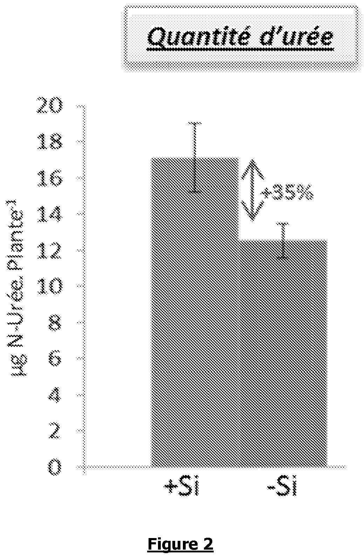

*Figure 2* *:* graphique qui représente la quantité d'urée dans un plant de riz (i) avec une alimentation qui comprend du silicium (Na₂SiO₃), *i.e.* barre « +Si » et (ii) avec une alimentation qui ne comprend pas de silicium, *i.e.* barre « -Si ». Le graphique montre une augmentation de 35% de la quantité d'urée dans les plantes dont l'alimentation comprend du silicium par rapport aux plantes dont l'alimentation ne comprend pas de silicium. Le graphique montre que le silicium stimule l'absorption de l'urée.

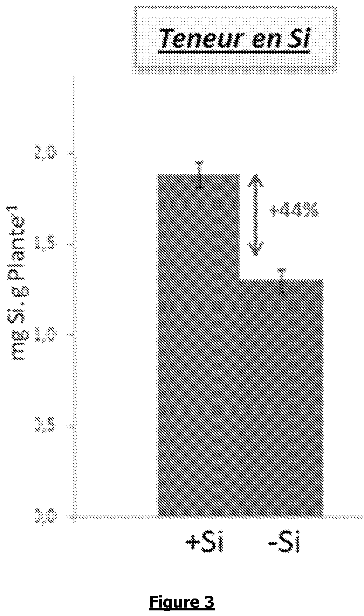

*Figure 3* *:* graphique qui représente la quantité de silicium dans un plant de riz (i) avec une alimentation qui comprend du silicium (Na₂SiO₃), *i.e.* barre « +Si » et (ii) avec une alimentation qui ne comprend pas de silicium, *i.e.* barre « -Si ». Le graphique montre une augmentation de 44% de la quantité de silicium dans les plantes dont l'alimentation comprend du silicium par rapport aux plantes dont l'alimentation ne comprend pas de silicium. Le graphique montre que le silicium est absorbé par la plante.

### Exemples

### Exemple 1 : Préparation du matériel végétal

Des graines de riz, *Oryza sativa L. Var ADRET,* ont été placées à + 4°C la veille de leur mise en germination pour assurer une levée homogène. Elles ont ensuite été semées sur une couche de perlite dans des bacs contenant de l'eau déminéralisée et ont été laissées à l'obscurité pendant 10 jours, avant d'être mises à la lumière. Après 7 jours, les plantules ont été repiquées dans des bacs de 8L contenant une solution Hoagland (tableau 1).

**Tableau 1 : composition d'une solution Hoagland**

| Macroéléments | [conc finale] mM |
|---|---|
| CO(NH₂)₂ | 1 |
| KCl | 0,1 |
| CaCl₂ | 0,18 |
| KH₂PO₄ | 0,3 |
| MgSO₄, 7H₂O | 0,27 |
| EDTA, 2NaFe, H₂O | 0,2 |

| Microéléments | [conc finale] µM |
|---|---|
| H₃BO₃ | 9,4 |
| MnSO₄, H₂O | 6,7 |
| CuSO₄, 5H₂O | 0,16 |
| ZnSO₄, 7H₂O | 0,15 |
| (NH₄)₆ Mo₇O₂₄, 4H₂O | 0,015 |
| CoCl₂, 6H₂O | 0,1 |
| NiCl₂ | 0,04 |

### Alimentation qui comprend du silicium (+Si)

2mM d'azote a été apporté aux plantules sous la forme d'urée [CO(NH₂)₂] . Du silicium à 1,5 mM a été apporté aux plantules sous forme de silicate de sodium (Na₂SiO₃) qui a été neutralisé avec du HCl (1M, 30 ml pour 8L de solution nutritive), afin de favoriser la formation du Si(OH)₄, selon le schéma réactionnel ci-dessous.

Na₂SiO₃ + 2HCl + H₂O → Si(OH)₄ + 2NaCl

Un apport de nickel (40 nM) a également été effectué afin de favoriser l'assimilation de l'urée par les plantes.

Un changement de solution nutritive a été effectué tous les 2 jours et le pH a été ajusté entre 5,6 et 6. L'expérience a été menée dans une chambre de croissance à +22°C avec une photopériode de 12h/12h sous des lampes néons (lumilux cool daylight, 36 W). Les plantes ont été récoltées 14 jours après application des traitements.

### Alimentation qui ne comprend pas de silicium (-Si)

2mM d'azote a été apporté aux plantules sous la forme d'urée [CO(NH₂)₂]. Un apport de nickel (40 nM) a également été effectué afin de favoriser l'assimilation de l'urée par les plantes.

Un changement de solution nutritive a été effectué tous les 2 jours et le pH a été ajusté entre 5,6 et 6. L'expérience a été menée dans une chambre de croissance à +22°C avec une photopériode de 12h/12h sous des lampes néons (lumilux cool daylight, 36 W). Les plantes ont été récoltées 14 jours après application des traitements.

### Exemple 2 : Mesure des paramètres physiologiques de la plante

### 1. Détermination des biomasses foliaires et racinaires

Pour chacune des conditions de culture (+Si et -Si), quatre lots de trois plantes récoltées à l'Exemple 1 ont été constitués (1 lot de 3 plantes = 1 répétition biologique). Les parties aériennes (feuilles et tiges) et racinaires de chaque plante ont été séparées, pesées (biomasse fraîche) puis broyées finement dans de l'azote liquide. La mesure de la biomasse d'une plante entière est présentée dans la figure 1.

Conclusion : les plantes traitées avec du silicium présentent une augmentation significative de leur biomasse (+60%), ce qui traduit une meilleure croissance du plant de riz.

### 2. Analyses biochimiques

Pour chacune des répétitions biologiques, des échantillons de matière fraîche broyée (obtenus selon le point 1) ont été séparés en deux lots (i.e. 2 lots de racines broyées et 2 lots de feuilles broyées). Le premier a été lyophilisé pendant 48h, a servi à la détermination de la matière sèche et à l'analyse du silicium (Si) par ICP-OES (Inductively Coupled Plasma - Optical Emission Spectroscopy). Le deuxième lot a immédiatement été plongé dans l'azote liquide puis conservé à - 80°C pour l'extraction et le dosage de l'urée. L'ensemble des traitements ont été réalisés systématiquement pour chacune des répétitions biologiques, c'est-à-dire en quadruplât. Les données obtenues ont été présentées sous forme de moyenne et la variabilité des résultats a été donnée sous la forme de l'erreur standard de la moyenne pour n=4. Une analyse statistique des résultats a été réalisée en utilisant le test de Student.

### Dosage de l'urée

L'extraction de l'urée a été réalisée selon la méthode décrite dans Arkoun et al., 2013. A Physiological and molecular study of the effects of nickel deficiency and Phenylphosphorodiamidate (PPD) application on urea metabolism in oilseed rape (Brassica napus L.). Plant and Soil, 362:79-92. En bref, l'extraction de l'urée et de l'ammonium a nécessité 0,2 g de matière fraîche (de feuilles ou de racines), auxquelles ont été ajoutés 1ml d'eau pure. Les tubes ont immédiatement été plongés dans l'azote liquide puis mis au bain-marie (80°C) pendant 5 minutes. Après centrifugation (2 min, 15000 g à 4°C), le surnageant a été récupéré (Surnageant 1) et le culot a été suspendu dans 0,5ml d'eau pure, agité (à l'aide d'un Vortex) et centrifugé. Le surnageant (Surnageant 2) a été récupéré et ajouté au Surnageant 1 et le culot a été suspendu dans 0,5ml d'eau pure, agité (à l'aide d'un Vortex) et centrifugé. Le surnageant (Surnageant 3) a été récupéré et ajouté aux Surnageant 1 et 2. Au final, 2ml d'extrait (ci-après « Extrait Urée ») ont été récupérés, filtrés puis stockés à +20°C.

Le dosage de l'urée a été réalisé à l'aide de la méthode mise au point par Kyllingsbæk (1975), Extraction and colorimétrie détermination of urea in plants. Acta Agricult Scand B Soil Plant Sci 25:109-112. En bref, 0,2 ml de l'Extrait Urée ont été prélevés auxquels ont été rajoutés 0,6 ml de réactif. Les échantillons ont ensuite été placés au bain-marie à 85°C pendant 30 minutes puis placés à +4°C pendant 20 minutes pour stopper la réaction. La lecture a été effectuée à l'aide d'un spectrophotomètre à une longueur d'onde de 545 nm et la teneur en urée a été déterminée à partir d'une courbe étalon. Le dosage de l'urée est présenté dans la figure 2.

Conclusion : les plantes traitées avec du silicium présentent une augmentation significative de l'absorption de l'urée (+35%).

### Dosage du silicium

La détermination du contenu des échantillons en silicium (Si) a été réalisée à l'aide d'un ICP-OES (Inductively Coupled Plasma-Optical Emission Spectroscopy, Thermo Elemental Co. Iris Intrepid II XDL). Elle a été précédée d'une digestion des échantillons lyophilisés pendant 48h par micro-ondes en milieu acide (8 mL d'acide nitrique concentré et 2 mL de peroxyde d'hydrogène pour 0,1g de matière sèche).

Le dosage du silicium est présenté dans la figure 3.

Conclusion : une partie du silicium utilisé est absorbé par la plante.

## Revendications

1. Utilisation du silicium dans une composition fertilisante en association avec de l'urée, comme stimulant de l'absorption de l'azote chez une plante, **caractérisée en ce que** l'azote est absorbé sous la forme d'urée.

2. Utilisation selon la revendication 1, **caractérisée en ce que** la plante est une plante accumulatrice de silicium.

3. Utilisation selon la revendication 2 **caractérisé en ce que** la plante est choisie parmi le riz, le blé, l'avoine, la canne à sucre, l'orge, le soja et le maïs, de préférence le riz.

4. Utilisation selon l'une des revendications 1 à 3, **caractérisée en ce que** le silicium est apporté à la plante sous la forme de silicate de sodium (Na₂SiO₃), de silicate de potassium (K₂Si0₃), et/ou de leurs dérivés.

5. Utilisation selon l'une des revendications 1 à 4, **caractérisée en ce que** le silicium est apporté à la plante sous forme de terre de diatomée, de verre soluble à base de silicium et/ou de silicium organique.

6. Utilisation selon l'une des revendications 1 à 5, **caractérisée en ce que** le silicium est apporté à la plante dans une quantité suffisante pour augmenter l'absorption de l'azote par la plante d'au moins 10%, avantageusement d'au moins 30%, avantageusement d'au moins 50%.

7. Utilisation selon l'une des revendications 1 à 6, **caractérisée en ce que** le silicium est apporté à la plante :
- soit sous forme liquide dans des solutions nutritives racinaires, par exemple en une quantité allant de 0.5 à 5 g/L, et de préférence de l'ordre de 1 g/L
- soit sous forme liquide dans des solutions nutritives foliaires, par exemple en une quantité allant de10 à 50 g/L, et de préférence de l'ordre de 30 g/L
- soit sous forme solide, par exemple dans des engrais pulvérulents ou granulés, par exemple en une quantité allant de 10 à 100 kg/T et de préférence de l'ordre de 50 kg/T.

8. Procédé pour stimuler l'absorption de l'azote chez une plante, **caractérisé en ce qu'**il comprend l'apport à ladite plante ou aux sols d'une quantité efficace de silicium dans une composition fertilisante en association avec de l'urée, **caractérisée en ce que** l'azote est absorbé sous la forme d'urée.

9. Procédé selon la revendication 8 **caractérisé en ce que** la plante est une plante accumulatrice de silicium.

10. Procédé selon la revendication 9, **caractérisé en ce que** la plante est choisie parmi le riz, le blé, l'avoine, la canne à sucre, l'orge, le soja et le maïs, de préférence le riz.

11. Procédé selon l'une des revendications 8 à 10, **caractérisé en ce que** l'apport à la plante est réalisée par voie racinaire ou par voie foliaire.

12. Procédé selon l'une des revendications 8 à 11, **caractérisé en ce que** le silicium est apporté à la plante :
- soit sous forme liquide dans des solutions nutritives racinaires, par exemple en une quantité allant de 0.5 à 5 g/L, et de préférence de l'ordre de 1 g/L ;
- soit sous forme liquide dans des solutions nutritives foliaires, par exemple en une quantité allant de 10 à 50 g/L, et de préférence de l'ordre de 30 g/L ;
- soit sous forme solide, par exemple dans des engrais pulvérulents ou granulés, par exemple en une quantité allant de 10 à 100 kg/T et de préférence de l'ordre de 50 kg/T.

## Patentansprüche

1. Verwendung von Silizium in einem Düngemittel in Verbindung mit Harnstoff als Stimulans zur Aufnahme von Stickstoff bei einer Pflanze, **dadurch gekennzeichnet, dass** der Stickstoff in der Form von Harnstoff aufgenommen wird.

2. Verwendung nach Anspruch 1, **dadurch gekennzeichnet, dass** die Pflanze eine Pflanze ist, die Silizium speichert.

3. Verwendung nach Anspruch 2, **dadurch gekennzeichnet, dass** die Pflanze aus Reis, Weizen, Hafer, Rohrzucker, Gerste, Soja und Mais, bevorzugt Reis, ausgewählt ist.

4. Verwendung nach einem der Ansprüche 1 bis 3, **dadurch gekennzeichnet, dass** das Silizium der Pflanze in der Form von Natriumsilikat (Na₂SiO₃), Kaliumsilikat (K₂SiO₃) und/oder Derivaten davon verabreicht wird.

5. Verwendung nach einem der Ansprüche 1 bis 4, **dadurch gekennzeichnet, dass** das Silizium der Pflanze in Form von Diatomeenerde, Wasserglas auf Basis von Silizium und/oder organischem Silizium verabreicht wird.

6. Verwendung nach einem der Ansprüche 1 bis 5, **dadurch gekennzeichnet, dass** das Silizium der Pflanze in einer Menge verabreicht wird, die ausreicht, um die Aufnahme von Stickstoff durch die Pflanze um mindestens 10 %, vorteilhafterweise mindestens 30 %, vorteilhafterweise mindestens 50 % zu erhöhen.

7. Verwendung nach einem der Ansprüche 1 bis 6, **dadurch gekennzeichnet, dass** das Silizium der Pflanze verabreicht wird:
- entweder in flüssiger Form in Wurzelnährlösungen, zum Beispiel in einer Menge von 0,5 bis 5 g/l, und bevorzugt in der Ordnung von 1 g/l,
- oder in flüssiger Form in Blattnährlösungen, zum Beispiel in einer Menge von 10 bis 50 g/l, und bevorzugt in der Ordnung von 30 g/l,
- oder in fester Form, zum Beispiel in pulverisiertem Dünger oder Granulat, zum Beispiel in einer Menge von 10 bis 100 kg/t, und bevorzugt in der Ordnung von 50 kg/t.

8. Verfahren zum Stimulieren der Aufnahme von Stickstoff bei einer Pflanze, **dadurch gekennzeichnet, dass** es das Verabreichen einer wirksamen Menge an Silizium in einem Düngemittel in Verbindung mit Harnstoff an die Pflanze oder an den Boden umfasst, **dadurch gekennzeichnet, dass** der Stickstoff in der Form von Harnstoff aufgenommen wird.

9. Verfahren nach Anspruch 8, **dadurch gekennzeichnet, dass** die Pflanze eine Pflanze ist, die Silizium speichert.

10. Verfahren nach Anspruch 9, **dadurch gekennzeichnet, dass** die Pflanze aus Reis, Weizen, Hafer, Rohrzucker, Gerste, Soja und Mais, bevorzugt Reis, ausgewählt ist.

11. Verfahren nach einem der Ansprüche 8 bis 10, **dadurch gekennzeichnet, dass** das Verabreichen an die Pflanze auf dem Wurzelweg oder auf dem Blattweg umgesetzt wird.

12. Verfahren nach einem der Ansprüche 8 bis 11, **dadurch gekennzeichnet, dass** das Silizium der Pflanze verabreicht wird:
- entweder in flüssiger Form in Wurzelnährlösungen, zum Beispiel in einer Menge von 0,5 bis 5 g/l, und bevorzugt in der Ordnung von 1 g/l,
- oder in flüssiger Form in Blattnährlösungen, zum Beispiel in einer Menge von 10 bis 50 g/l, und bevorzugt in der Ordnung von 30 g/l,
- oder in fester Form, zum Beispiel in pulverisiertem Dünger oder Granulat, zum Beispiel in einer Menge von 10 bis 100 kg/t, und bevorzugt in der Ordnung von 50 kg/t.

## Claims

1. Use of silicon in a fertilizing composition in association with urea, as a stimulant for nitrogen absorption in a plant, **characterized in that** the nitrogen is absorbed in the form of urea.

2. The use according to claim 1, **characterized in that** the plant is a silicon-accumulating plant.

3. The use according to claim 2, **characterized in that** the plant is selected from rice, wheat, oats, sugar cane, barley, soya and maize, preferably rice.

4. The use according to any one of claims 1 to 3, **characterized in that** the silicon is supplied to the plant in the form of sodium silicate (Na₂SiO₃), potassium silicate (K₂SiO₃), and/or their derivatives.

5. The use according to any one of claims 1 to 4, **characterized in that** the silicon is supplied to the plant in the form of diatomaceous earth, silicon-based soluble glass and/or organic silicon.

6. The use according to any one of claims 1 to 5, **characterized in that** the silicon is supplied to the plant in a quantity that is sufficient to increase nitrogen absorption by the plant by at least 10%, advantageously by at least 30%, advantageously by at least 50%.

7. The use according to any one of claims 1 to 6, **characterized in that** the silicon is supplied to the plant:
· either in the liquid form in root nutrient solutions, for example in a quantity of 0.5 to 5 g/L, and preferably of the order of 1 g/L;
· or in the liquid form in foliage nutrient solutions, for example in a quantity of 10 to 50 g/L, and preferably of the order of 30 g/L;
· or in the solid form, for example in powdered or granulated fertilizers, for example in a quantity of 10 to 100 kg/t and preferably of the order of 50 kg/t.

8. A method for stimulating nitrogen absorption in a plant, **characterized in that** it comprises supplying an effective quantity of silicon in a fertilizing composition in association with urea to said plant or to soils, **characterized in that** the nitrogen is absorbed in the form of urea.

9. The method according to claim 8, **characterized in that** the plant is a silicon-accumulating plant.

10. The method according to claim 9, **characterized in that** the plant is selected from rice, wheat, oats, sugar cane, barley, soya, and maize, preferably rice.

11. The method according to any one of claims 8 to 10, **characterized in that** the plant is supplied by way of the roots or by way of the leaves.

12. The method according to any one of claims 8 to 11, **characterized in that** the silicon is supplied to the plant:
· either in liquid form in root nutrient solutions, for example in a quantity of 0.5 g/L to 5 g/L, and preferably of the order of 1 g/L;
· or in liquid form in foliage nutrient solutions, for example in a quantity of 10 g/L to 50 g/L, and preferably of the order of 30 g/L;
· or in solid form, for example in powdered or granulated fertilizers, for example in a quantity of 10 kg/t to 100 kg/t and preferably of the order of 50 kg/t.
